# EUROPÄISCHE PATENTANMELDUNG

(11) **EP 4 572 045 A1**
(43) Veröffentlichungstag der Anmeldung: **18.06.2025**
(21) Anmeldenummer: 23216657.9
(22) Anmeldetag: 14.12.2023
(51) Int. Cl.: H02G 3/06, F16L 5/08, F16L 37/10, F16L 41/14, H02G 3/22, H02G 15/013

(54) **KABELDURCHFÜHRUNG**

(71) Anmelder: CENA Kunststoff GmbH, 35088 Battenberg (DE)
(72) Erfinder: LIESE, Ralf, 59909 Bestwig (DE); SCHNARR, Karl, 35088 Battenberg (DE)
(74) Vertreter: Dantz, Jan Henning

(57) **Zusammenfassung**

Eine Kabeldurchführung (1) zur Durchführung eines Kabels (10) durch eine Öffnung (9) eines Wandelementes (8) umfasst ein Spannelement (2), das mit einem Verriegelungsabschnitt einen Rand der Öffnung (9) hintergreifen kann; einem mit dem Spannelement (2) verbundenen Zwischenstutzen (3), eine auf den Zwischenstutzen (3) aufschraubbaren Überwurfmutter (4), und ein Stützelement (6) zum bereichsweisen Abstützen des Spannelementes (2) an einer Innenseite, wobei das Stützelement (6) relativ zu dem Spannelement (2) um einen Winkelbereich von weniger als 360° drehbar ist, um mindestens einen Stützabschnitt (63) des Stützelementes (6) von einer entriegelten Position zur Montage des Spannelementes (2) an der Öffnung (9) des Wandelementes (8) in eine verriegelte Position zu bewegen, in der der mindestens eine Stützabschnitt (63) den mindestens einen Verriegelungsabschnitt (21) des Spannelementes (2) an einer Innenseite abstützt. Dadurch kann die Kabeldurchführung (1) effektiv mit wenigen Montageschritten montiert werden.

## Beschreibung

Die vorliegende Erfindung betrifft eine Kabeldurchführung zur Durchführung eines Kabels durch eine Öffnung eines Wandelementes, mit einem Spannelement, das mit einem Verriegelungsabschnitt einen Rand der Öffnung hintergreifen kann, einem mit dem Spannelement verbundenen Zwischenstutzen, einer auf den Zwischenstutzen aufschraubbaren Überwurfmutter, und einem Stützelement zum bereichsweisen Abstützen des Spannelementes an einer Innenseite.

Die DE 10 2021 106 864 A1 offenbart eine Kabeldurchführung, bei der ein in eine Öffnung einer Wand einfügbares Einsteckteil mit Rasthaken versehen ist, das durch ein inneres hülsenförmiges Sicherungsteil gegen ein Lösen gesichert sind. In dem Sicherungsteil ist zudem ein aus Stegen gebildeter Käfig für ein Dichtelement ausgebildet, das über eine Überwurfmutter fixiert werden kann, die auf einen Gewindeabschnitt des Einsteckteils aufschraubbar ist. Dadurch lässt sich ein Kabel im Wesentlichen abgedichtet durch eine Gehäusewand durchführen, allerdings ist die Haltekraft gegen eine Zugbelastung des Kabels begrenzt. Zudem lässt sich die Kabeldurchführung mit dem Einsteckteil nur an Wänden mit einer bestimmten Wanddicke montieren.

Um eine Kabeldurchführung an unterschiedlich dicken Wänden montieren zu können, ist es aus der DE 10 2022 104 790 A1 bekannt, ein Spannelement mit Federstegen an einer Öffnung zu montieren und zur Fixierung des Spannelementes dann einen Gewindestutzen in das Spannelement einzudrehen. An dem Gewinde des Zwischenstutzens ist zudem eine Mutter mit einem Gewinde gelagert, die flexibel an unterschiedlich dicken Wänden montiert werden kann, um die Wand klemmend zwischen der Mutter und dem Spannelement zu fixieren. Das Spannelement ist dann durch einen stutzenförmigen Abschnitt des Zwischenstutzens gesichert, an dem auch ein Käfig mit einem Dichtelement und einer Überwurfmutter vorgesehen sind. Diese Kabeldurchführung besitzt eine vergleichsweise große Erstreckung in axiale Richtung. Zudem ist das Einschrauben des stutzenförmigen Abschnittes in das Spannelement aufwändig.

Es ist daher Aufgabe der vorliegenden Erfindung, eine Kabeldurchführung zur Durchführung eines Kabels durch eine Öffnung eines Wandelementes zu schaffen, die effektiv montiert werden kann und flexibel an unterschiedlich dicken Wandelementen montierbar ist.

Diese Aufgabe wird mit einer Kabeldurchführung mit den Merkmalen des Anspruches 1 gelöst.

Die erfindungsgemäße Kabeldurchführung zur Durchführung eines Kabels durch eine Öffnung eines Wandelementes umfasst ein Spannelement, das mit mindestens einem Verriegelungsabschnitt einen Rand der Öffnung hintergreifen kann, einem mit dem Spannelement verbundenen Zwischenstutzen, einer auf den Zwischenstutzen aufschraubbaren Überwurfmutter und ein Stützelement zum bereichsweisen Abstützen des Spannelementes an einer Innenseite, wobei das Stützelement relativ zu dem Spannelement um einen Winkelbereich von weniger als 360° drehbar ist, um mindestens einen Stützabschnitt des Stützelementes von einer entriegelten Position zur Montage des Spannelementes an der Öffnung des Wandelementes in eine verriegelte Position zu bewegen, in der der mindestens eine Stützabschnitt den Verriegelungsabschnitt des Spannelementes an einer Innenseite abstützt. Dadurch kann eine Relativbewegung des Stützelementes relativ zu dem Spannelement genutzt werden, um eine vormontierte Kabeldurchführung von einer entriegelten Position, in der das Spannelement mit dem Verriegelungsabschnitt durch eine Öffnung eines Wandelementes durchsteckbar ist, in eine verriegelte Position zu bringen, in der das Spannelement im Bereich des Verriegelungsabschnittes durch den Stützabschnitt des Stützelementes abgestützt ist, so dass ein Herausziehen des Spannelementes aus der Öffnung in axiale Richtung verhindert wird. Dabei lässt sich die Montage effektiv durchführen, da zwischen der entriegelten und der verriegelten Position nur eine Drehbewegung von weniger als 360° durchgeführt werden muss. Zudem kann das Stützelement relativ zu dem Spannelement in axiale Richtung verschoben werden, so dass die Kabeldurchführung einfach an unterschiedlich dicken Wandelementen montiert werden kann.

Vorzugsweise ist der Drehweg des Stützelementes relativ zu dem Spannelement von einer entriegelten Position in die verriegelte Position zwischen 5° und 90°, insbesondere zwischen 10° und 50°so dass die Verriegelung der Kabeldurchführung an dem Wandelement mit einer kurzen Bewegung durchführbar ist. Die Stützabschnitte bewegen sich relativ zu dem Spannelement vorzugsweise zwischen 2 mm und 10 mm in Umfangsrichtung, was für eine Abstützung des Verriegelungsabschnittes ausreichend ist. Bei der Drehbewegung ist es gleichgültig, ob das Spannelement stationär an dem Wandelement angeordnet ist und nur das Stützelement gedreht wird, oder das Stützelement stationär bleibt und nur das Spannelement gedreht wird oder sowohl Spannelement als auch Stützelement gedreht werden, um eine Bewegung von der entriegelten Position in die verriegelte Position durchzuführen.

Das Spannelement umfasst bevorzugt einen Ring, an dem mindestens zwei sich in axiale Richtung erstreckende Federstege ausgebildet sind. Vorzugsweise sind drei Federstege vorgesehen, die sich parallel zur axialen Richtung erstrecken und die einen Kanal zur Durchführung des Kabels umgeben. Zwischen den Federstegen sind bevorzugt Öffnungen ausgebildet, wobei das Stützelement mindestens einen Steg zu dem Stützabschnitt umfasst, der eine solche Öffnung zwischen zwei Federstegen durchgreift. Dann kann ein Ring des Stützelementes um das Spannelement herum angeordnet werden und in axiale Richtung relativ zu diesem verschiebbar sein. Dieser äußere Ring des Stützelementes durchgreift dann die Öffnungen zwischen zwei Federstegen und bildet einen Stützabschnitt aus, der in der verriegelten Position einen Verriegelungsabschnitt an den Federstegen an der Innenseite abstützt, um die Kabeldurchführung an dem Wandelement zu fixieren. Die Stege erstrecken sich dabei zumindest teilweise in axiale Richtung und besitzen einen abgewinkelten Abschnitt, der einen Stützabschnitt ausbildet. Der abgewinkelte Abschnitt ist beispielsweise im Wesentlichen in Umfangsrichtung ausgerichtet. Die Stützabschnitte können jeweils in axialer Richtung an unterschiedlichen Positionen an dem Federstege angeordnet werden, um den Verriegelungsmechanismus an unterschiedlich dicken Wandelementen nutzen zu können.

In einer weiteren Ausgestaltung ist das Stützelement an dem Spannelement in der verriegelten Position verrastbar. Hierfür können Rastmittel in Form von Rastaufnahmen und Rastvorsprüngen an dem Stützelement und/oder dem Spannelement zum Halten der verriegelten Position vorgesehen sein. Bevorzugt ist an dem Stützabschnitt ein erster Rasthaken und an der Innenseite eines Verriegelungsabschnittes ein zweiter Rasthaken vorgesehen, die bei einer Bewegung von der entriegelten Position in die verriegelte Position ineinander verrastet werden können, um eine sichere Fixierung der Kabeldurchführung zu gewährleisten. Dabei kann jeder Federsteg des Spannelementes mit einem Stützabschnitt verrastet sein. Optional kann das Stützelement an dem Spannelement auch in der entriegelten Position verrastet werden, um die Montage zu erleichtern, in dem vormontierte Position verrastet ist.

Für eine stabile Fixierung kann das Stützelement einen Klemmring umfassen, der klemmend zwischen dem Zwischenstutzen und dem Wandelement fixierbar ist. Dadurch kann über den Zwischenstutzen eine axiale Positionierung des Stützelementes vorgenommen werden, wobei der Zwischenstutzen vorzugsweise über ein Gewinde mit dem Spannelement verbunden ist. Hierfür kann der Zwischenstutzen bevorzugt ein Innengewinde aufweisen, das auf ein Außengewinde des Spannelementes aufgeschraubt ist, was zu einem kompakten Aufbau führt. Über eine solche Gewindeverbindung lassen sich die Verriegelungsabschnitte an dem Spannelement und der Klemmring zur Anpassung an unterschiedliche Wandstärken in entsprechendem Abstand positionieren. Der Klemmring muss dabei nicht unmittelbar an dem Wandelement anliegen, sondern kann über einen Dichtring gegen das Wandelement gedrückt werden, um eine verbesserte Abdichtung der Kabeldurchführung erreichen. Optional kann auch zwischen Spannring und Zwischenstutzen ein Dichtring vorgesehen sein.

Für eine zuverlässige Verriegelung kann das Spannelement mehrere biegbare Federstege aufweisen, die mindestens einen radial nach außen hervorstehenden Vorsprung aufweisen, bevorzugt mit einer Einführschräge, so dass der Vorsprung einen Rand der Öffnung des Wandelementes hintergreifen kann.

Zur Abdichtung der Kabeldurchführung kann in dem Zwischenstutzen ein Käfig ausgebildet sein, insbesondere ein Käfig mit mehreren sich in axiale Richtung erstreckenden biegbaren Stegen, in dem ein elastisches Dichtelement aufgenommen ist. Durch dieses Dichtelement kann beim Aufschrauben der Überwurfmutter, an der bevorzugt eine konusförmige Schräge ausgebildet ist zum Komprimieren des Käfigs und des Dichtelementes, eine zuverlässige Abdichtung erhalten werden.

Für einen besonders kompakten Aufbau weist der Zwischenstutzen ein Innengewinde auf, das auf ein Außengewinde des Spannelementes aufschraubbar ist, wobei das Innengewinde und das Außengewinde des Zwischenstutzens einander in axiale Richtung überlappen.

Die Erfindung wird nachfolgend anhand eines Ausführungsbeispiels mit Bezug auf die beigefügten Zeichnungen näher erläutert. Es zeigen:

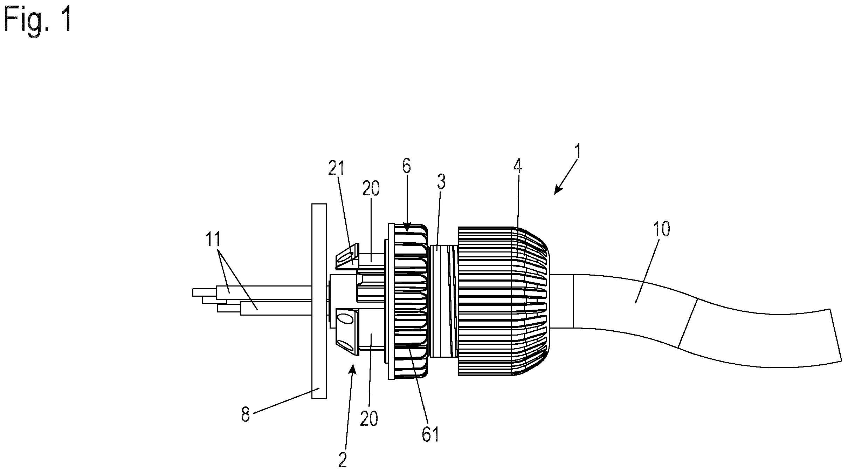

- Figur 1: eine Seitenansicht auf eine erfindungsgemäße Kabeldurchführung vor der Montage;
- Figuren 2A bis 2C: mehrere Ansichten der Kabeldurchführung der Figur 1 in verschiedenen Explosionsdarstellungen;
- Figur 3: eine Schnittansicht durch eine Kabeldurchführung vor der Montage an einem Wandelement;
- Figuren 4A und 4B: zwei Ansichten der Kabeldurchführung nach dem Durchstecken durch ein Wandelement;
- Figuren 5A und 5B: zwei Ansichten der Kabeldurchführung der Figur 4 in der verriegelten Position, und
- Figuren 6A und 6B: zwei Detailansichten des Verriegelungsmechanismus der Kabeldurchführung.

Eine Kabeldurchführung 1 dient zur Durchführung eines Kabels 10, beispielsweise mit mehreren elektrischen Leitern 11, durch ein Wandelement 8, das Teil eines Schaltschrankes oder eines anderen Gerätes sein kann. Die Kabeldurchführung 1 umfasst dabei ein Spannelement 2, das mit mehreren Federstegen 20 durch eine Öffnung des Wandelementes 8 durchgesteckt werden kann, wobei an jedem Federsteg 20 mindestens ein nach außen ragender Vorsprung als Verriegelungsabschnitt 21 vorgesehen ist, der einen Rand einer Öffnung in dem Wandelement 8 hintergreifen kann. Das Spannelement 2 ist mit einem Zwischenstutzen 3 verbunden, insbesondere über eine Gewindeverbindung, und um das Spannelement 2 ist ein Klemmring 61 eines Stützelementes 6 angeordnet. Auf den Zwischenstutzen 3 ist eine Überwurfmutter 4 aufgeschraubt.

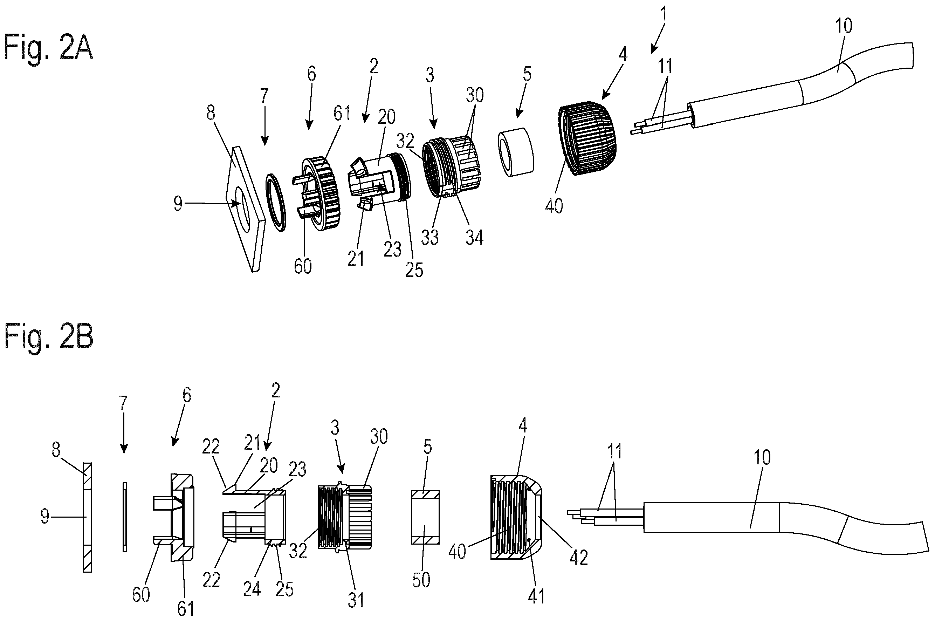

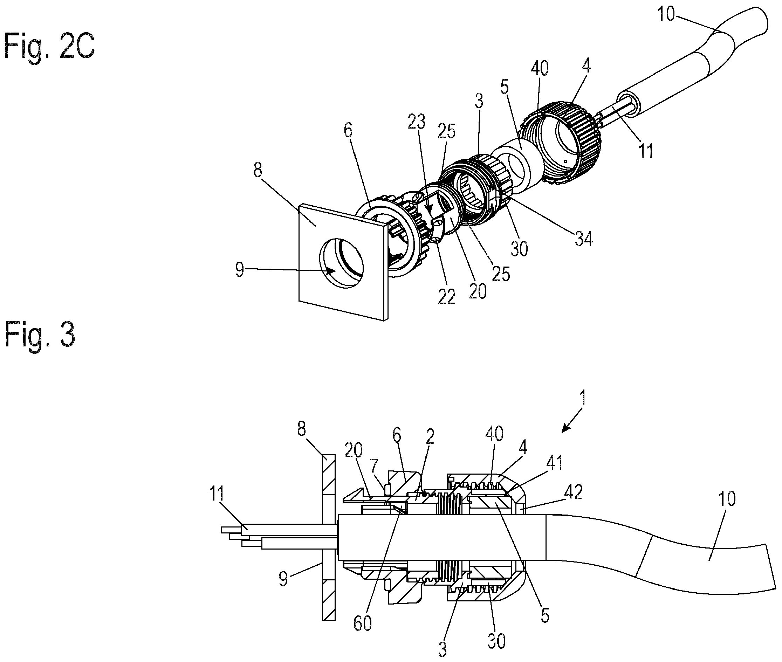

In den Figuren 2A bis 2C ist die Kabeldurchführung 1 in einer Explosionsdarstellung mit den Einzelteilen gezeigt. Das Spannelement 2 umfasst einen Ring 24, von dem mehreren Federstege 20 in axiale Richtung hervorstehen, wobei zwischen zwei Federstegen 20 jeweils eine Öffnung 23 ausgebildet ist. An jedem Federsteg 20 ist an einem Ende ein radial nach außen ragender Vorsprung als ein Verriegelungsabschnitt 21 ausgebildet, der in Einsteckrichtung eine Anlaufschräge 22 aufweist. Dadurch kann beim Einstecken des Spannelementes durch eine Öffnung 9 des Wandelementes 8 der Federsteg 20 durch die Anlaufschräge 22 radial nach innen verbogen werden, um dann nach Durchstecken durch die Öffnung 9 mit dem Verriegelungsabschnitt 21 einen Rand der Öffnung 9 zu hintergreifen. An dem Ring 24 des Spannelementes 2 ist ferner ein Außengewinde 25 ausgebildet, das mit einem Innengewinde 32 des Zwischenstutzens 3 in Eingriff steht.

Der Zwischenstutzen 3 umfasst einen Käfig 30, der vorzugsweise aus einer Vielzahl umlaufend angeordneter Stege gebildet ist, die sich parallel zu einer axialen Richtung erstrecken und zur Aufnahme eines Dichtelementes 5 dienen. Das Dichtelement 5 kann bis zu einem radial nach innen hervorstehenden Vorsprung 31 in den Käfig 30 des Zwischenstutzens 3 eingesteckt werden und weist eine zylindrische Öffnung 50 zur Durchführung des Kabels 10 auf. Der Zwischenstutzen 3 weist am äußeren Umfang ein Außengewinde 34 auf, das sich in axiale Richtung mit dem Innengewinde 32 überschneidet, vorzugsweise um mehr als 80 %, was zu einem besonders kompakten Aufbau führt. Das Außengewinde 34 kann dabei über den Umfang verteilt eine oder mehrere Abflachungen 33 besitzen.

Auf das Außengewinde 34 des Zwischenstutzens 3 wird die Überwurfmutter 4 aufgeschraubt, die ein Innengewinde 40 besitzt und benachbart zu dem Innengewinde 40 einen konischen Abschnitt 41, der an einer Öffnung 42 mündet. Über den konischen Abschnitt 41 kann beim Aufschrauben der Überwurfmutter 4 auf den Zwischenstutzen 3 der Käfig 30 und somit das Dichtelement 5 komprimiert werden, damit dieses gegen einen äußeren Umfang des Kabels 10 drückt und abdichtet.

Das Stützelement 6 umfasst einen Klemmring 61, der um das Spannelement 2 angeordnet werden kann und an der Innenseite mehrere Stege 60 umfasst. Jeder Steg 60 durchgreift dabei eine Öffnung 23 zwischen zwei Federstegen 20 in der montierten Position.

Figur 3 zeigt eine Schnittansicht durch eine Kabeldurchführung 1 in der vormontierten Position, bei der die Bauteile der Kabeldurchführung 1 vormontiert neben einem Wandelement 8 angeordnet sind. Das Stützelement 6 ist um das Spannelement 2 angeordnet, und der Zwischenstutzen 3 ist auf das Spannelement aufgeschraubt. Ferner ist die Überwurfmutter 4 auf den Zwischenstutzen 3 aufgeschraubt und umgibt den Käfig 30 mit dem Dichtelement 5. Das Kabel 10 ist durch die Kabeldurchführung 1 und die Öffnung 9 durchgeführt, und in dieser Position kann die Kabeldurchführung 1 mit den Federstegen 20 durch die Öffnung 9 durchgesteckt werden.

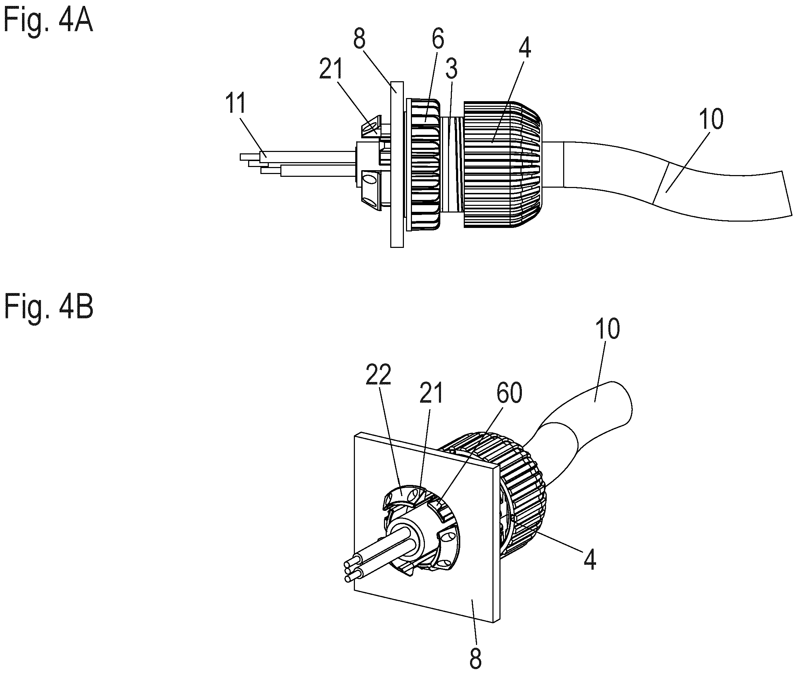

In den Figuren 4A und 4B sind die Federstege 20 durch das Wandelement durchgeführt, und die nach außen hervorstehenden Verriegelungsabschnitte 21 in Form von Vorsprüngen hintergreifen das Wandelement, wobei das Wandelement 8 mit Spiel zwischen den Verriegelungsabschnitten 21 und dem Stützelement 6 angeordnet ist. Um die Federstege 20 gegen eine Bewegung nach innen zu sichern, kann das Stützelement 6 relativ zu dem Spannelement 2 gedreht werden, vorzugsweise um einen Winkelbereich zwischen 5° und 60°, so dass die Federstege 20 über das Stützelement 6 an der Innenseite abgestützt werden. Dies verhindert ein Biegen der Federstege 20 nach innen, was zu einem erneuten Herausziehen der Kabeldurchführung 1 aus dem Wandelement 8 erforderlich wäre.

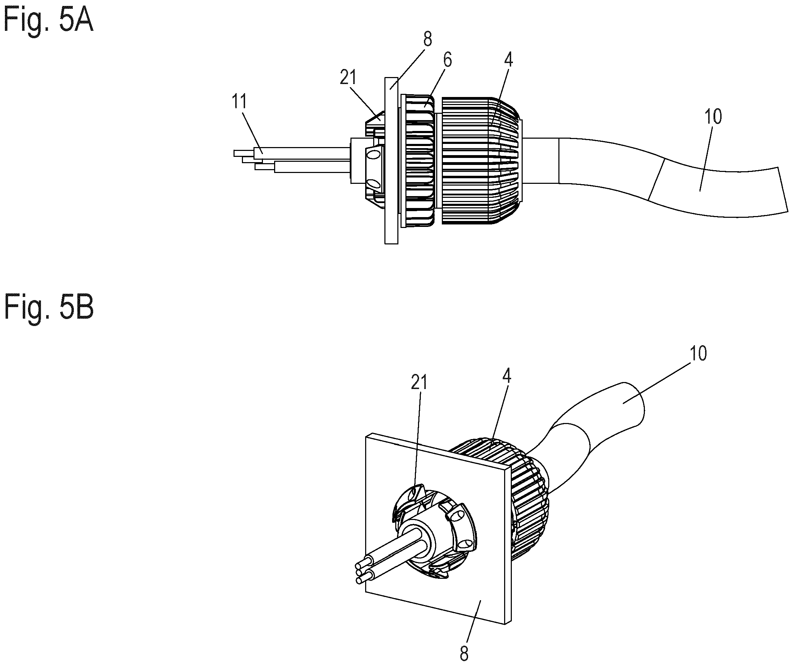

In dieser vormontierten Position wird nun der Zwischenstutzen 3 in das Spannelement 2 eingedreht, bis das Stützelement 6 mit dem Klemmring 61 klemmend zwischen dem Wandelement klemmend zwischen dem Wandelement 8 und dem Zwischenstutzen 3 angeordnet ist. Dadurch ist das Spiel in axiale Richtung für das Wandelement 8 beseitigt worden. Die verriegelte Position der Kabeldurchführung 1 ist in den Figuren 5A und 5B gezeigt. Das Stützelement 6 liegt über einen Dichtring 7 klemmend an dem Wandelement 8 an, wobei ein stirnseitiges Ende des Zwischenstutzens 3 gegen den Klemmring 61 drückt, wie dies auch der Schnittansicht der Figur 3 entnehmbar ist.

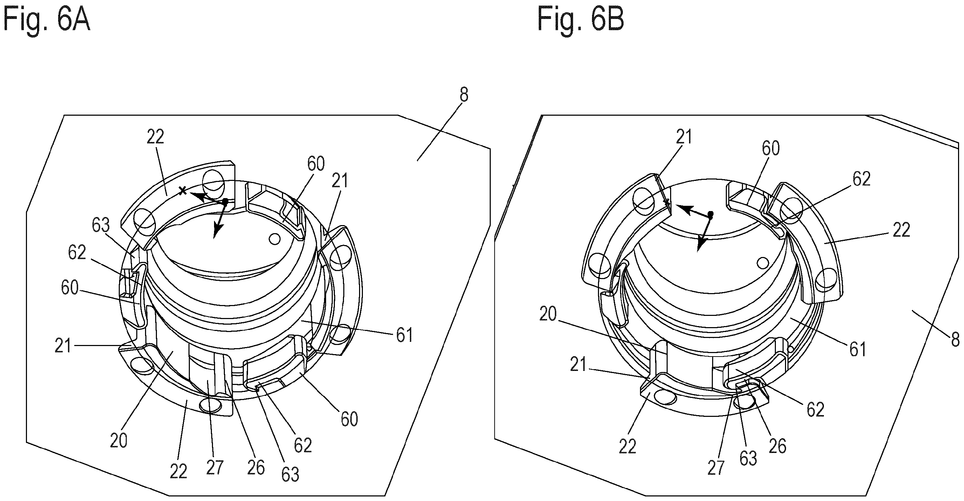

Die Verriegelungsmechanik des Stützelementes 6 und des Spannelementes 2 ist in den Figuren 6A und 6B im Detail gezeigt.

Figur 6A zeigt eine vormontierte Position der Kabeldurchführung 1 an dem Wandelement 8 in der entriegelten Position, in der die Federstege 20 sich radial nach innen bewegen können, um die Federstege 20 durch die Öffnung 9 einzustecken oder aus dieser herauszunehmen. Das Stützelement 6 umfasst den Klemmring 61, von dem drei Stege 60 im Wesentlichen in axiale Richtung hervorstehen und die Öffnungen 23 zwischen zwei Federstegen 20 durchgreifen. Am Ende der Stege 60 sind abgewinkelte Stützabschnitte 62 ausgebildet, die sich im Wesentlichen in Umfangsrichtung erstrecken und einen Rastvorsprung 63 aufweisen. Die Federstege 20 weisen an einer Innenseite gegenüberliegend zu den äußeren Verriegelungsabschnitten 21 eine Rastaufnahme 27 auf, die neben einem Rastvorsprung 26 angeordnet ist.

Um das Stützelement 6 von der entriegelten Position in die verriegelte Position zu bewegen, wird dieses ausgehend von Figur 6A im Uhrzeigersinn gedreht, so dass sich die Stege 60 mit den Stützabschnitten 62 in Umfangsrichtung drehen und der Rastvorsprung 63 in der Rastaufnahme 27 verrastet und der Rastvorsprung 26 in einer Rastaufnahme zwischen dem Rastvorsprung 63 und dem Steg 60 eingreift, wie dies in Figur 6B gezeigt ist. Durch die Stützabschnitte 62 sind nun die Federstege 20 gegen eine radiale Bewegung nach innen abgestützt, und die Kabeldurchführung 1 ist somit an dem Wandelement 8 gegen ein Herausziehen gesichert.

Die Stützabschnitt 62 weisen eine geringere axiale Erstreckung auf als die Rastaufnahme 27 an den Federstegen 20. Dadurch kann bei einem dickeren oder dünneren Wandelement 8 der Stützabschnitt 62 unterschiedlich an dem jeweiligen Federsteg 20 positioniert werden.

In dem dargestellten Ausführungsbeispiel ist die Überwurfmutter 4 am äußeren Umfang mit einer Rändelung versehen. Es ist auch möglich, statt der Rändelung eine andere Profilierung vorzusehen oder einen Mehrkant auszubilden, der mit einem Werkzeug drehbar ist. Auch das Stützelement 6 besitzt am äußeren Umfang eine Rändelung, die optional durch eine andere Profilierung oder einen Mehrkant ersetzt werden kann.

In dem dargestellten Ausführungsbeispiel wird der Zwischenstutzen 3 auf das Spannelement 2 verschraubt, um eine Anpassung an unterschiedliche Wanddicken vornehmen zu können. Bei konstanter Wanddicke kann der Zwischenstutzen auch integral mit dem Spannelement 2 ausgebildet sein.

Das Spannelement 2 weist drei Federstege 20 und das Stützelement 6 weist drei Stege 60 mit Stützabschnitten 62 auf. Es ist natürlich auch möglich, die Anzahl der Federstege 20 und der Stege 60 abhängig von den zu erwartenden Belastungen zu verändern.

Das Kabel 10 kann ohne Stecker durch die Kabeldurchführung 1 durchgeführt werden, optional kann auch ein vormontierter Stecker durch die Kabeldurchführung 1 durchgeführt werden. Die Kabeldurchführung 1 kann einen Verstellbereich in axiale Richtung aufweisen, der beispielsweise eine Montage an Wanddicken von 1 mm bis 5 mm ermöglicht.

Die Kabeldurchführung 1 wird in dem gezeigten Ausführungsbeispiel zur Durchführung elektrischer Leitungen eingesetzt, kann aber auch zur Durchführung anderer Kabel, Schläuche oder Leitungen, beispielsweise für Flüssigkeiten oder Gase, eingesetzt werden.

### Bezugszeichenliste

- 1: Kabeldurchführung
- 2: Spannelement
- 3: Zwischenstutzen
- 4: Überwurfmutter
- 5: Dichtelement
- 6: Stützelement
- 7: Dichtring
- 8: Wandelement
- 9: Öffnung
- 10: Kabel
- 11: elektrischer Leiter
- 20: Federsteg
- 21: Verriegelungsabschnitt
- 22: Anlaufschräge
- 23: Öffnung
- 24: Ring
- 25: Außengewinde
- 26: Rastvorsprung
- 27: Rastaufnahme
- 30: Käfig
- 31: Vorsprung
- 32: Innengewinde
- 33: Abflachung
- 34: Außengewinde
- 40: Innengewinde
- 41: konischer Abschnitt
- 42: Öffnung
- 50: zylindrische Öffnung
- 60: Steg
- 61: Klemmring
- 62: Stützabschnitt
- 63: Rastvorsprung

## Patentansprüche

1. Kabeldurchführung (1) zur Durchführung eines Kabels (10) durch eine Öffnung (9) eines Wandelementes (8), mit:
a) einem Spannelement (2), das mit einem Verriegelungsabschnitt einen Rand der Öffnung (9) hintergreifen kann;
b) einem mit dem Spannelement (2) verbundenen Zwischenstutzen (3);
c) einer auf den Zwischenstutzen (3) aufschraubbaren Überwurfmutter (4), und
d) einem Stützelement (6) zum bereichsweisen Abstützen des Spannelementes (2) an einer Innenseite,
**dadurch gekennzeichnet, dass** das Stützelement (6) relativ zu dem Spannelement (2) um einen Winkelbereich von weniger als 360° drehbar ist, um mindestens einen Stützabschnitt (62) des Stützelementes (6) von einer entriegelten Position zur Montage des Spannelementes (2) an der Öffnung (9) des Wandelementes (8) in eine verriegelte Position zu bewegen, in der der mindestens eine Stützabschnitt (62) den mindestens einen Verriegelungsabschnitt (21) des Spannelementes (2) an einer Innenseite abstützt.

2. Kabeldurchführung nach Anspruch 1, **dadurch gekennzeichnet, dass** die Drehung des Stützelementes (6) relativ zu dem Spannelement (2) von einer entriegelten Position in die verriegelte Position zwischen 5° und 90° beträgt.

3. Kabeldurchführung nach Anspruch 1 oder 2, **dadurch gekennzeichnet, dass** das Spannelement (2) einen Ring (24) umfasst, an dem mindestens zwei in axiale Richtung erstreckende Federstege (20) ausgebildet sind, an denen jeweils mindestens ein Verriegelungsabschnitt (21) vorgesehen ist.

4. Kabeldurchführung nach Anspruch 3, **dadurch gekennzeichnet, dass** das Stützelement (6) mindestens einen Steg (60) umfasst, der eine Öffnung (23) zwischen zwei Federstegen (20) durchgreift.

5. Kabeldurchführung nach Anspruch 4, **dadurch gekennzeichnet, dass** an den Stegen (60) ein abgewinkelter Stützabschnitt (62) ausgebildet ist, der an einer Innenseite der Federstege (20) in der verriegelten Position anliegt.

6. Kabeldurchführung nach einem der vorhergehenden Ansprüche, **dadurch gekennzeichnet, dass** das Stützelement (6) an dem Spannelement (2) in der verriegelten Position verrastbar ist.

7. Kabeldurchführung nach Anspruch 6, **dadurch gekennzeichnet, dass** Rastmittel in Form einer Rastaufnahme (27) und Rastvorsprüngen (63) zum Halten der verriegelten Position vorgesehen sind.

8. Kabeldurchführung nach einem der vorhergehenden Ansprüche, **dadurch gekennzeichnet, dass** das Stützelement (6) an dem Spannelement (2) in der entriegelten Position verrastbar ist.

9. Kabeldurchführung nach einem der vorhergehenden Ansprüche, **dadurch gekennzeichnet, dass** das Stützelement (6) einen Klemmring (61) umfasst, der klemmend zwischen dem Zwischenstutzen (3) und dem Wandelement (8) fixierbar ist.

10. Kabeldurchführung nach einem der vorhergehenden Ansprüche, **dadurch gekennzeichnet, dass** das Spannelement (2) mehrere biegbare Federstege (20) mit mindestens einem radial nach außen hervorstehenden Vorsprung (21) zum Hintergreifen eines Randes der Öffnung (9) aufweist.

11. Kabeldurchführung nach einem der vorhergehenden Ansprüche, **dadurch gekennzeichnet, dass** der Zwischenstutzen (3) einen Käfig (30) zur Aufnahme eines elastischen Dichtelementes (5) aufweist, durch das ein Kabel (10) durchführbar ist.

12. Kabeldurchführung nach einem der vorhergehenden Ansprüche, **dadurch gekennzeichnet, dass** der Zwischenstutzen (3) ein Innengewinde (32) aufweist, das auf ein Außengewinde (22) des Spannelementes (2) aufschraubbar ist.

13. Kabeldurchführung nach einem der vorhergehenden Ansprüche, **dadurch gekennzeichnet, dass** der Zwischenstutzen (3) ein Außengewinde (34) zum Aufschrauben der Überwurfmutter (4) aufweist und das Innengewinde (32) und das Außengewinde (34) an dem Zwischenstutzen (3) einander in axiale Richtung überlappen.
